# EUROPEAN PATENT SPECIFICATION

(11) **EP 3 150 071 B1**
(45) Date of publication and mention of the grant of the patent: **01.01.2020**
(21) Application number: 16188409.3
(22) Date of filing: 12.09.2016
(51) Int. Cl.: A21C 3/04, A21C 11/20, B65G 65/46

(54) **DOUGH HANDLING APPARATUS**
VORRICHTUNG ZUR TEIGHANDHABUNG
APPAREIL DE TRAITEMENT DE PÂTE

(30) Priority: 11.09.2015 NL 2015428
(43) Date of publication of application: 05.04.2017
(73) Proprietor: Kaak Groep B.V., 7061 GA Terborg (NL)
(72) Inventor: TERKEN, Johannes Albertus Alphonsus, 5222 BS 's-Hertogenbosch (NL); VAN DER CAMMEN, Gerardus Antonius Arnoldus, 5222 BS 's-Hertogenbosch (NL)
(74) Representative: Peters, Sebastian Martinus

(56) References cited:
- DE-B- 1 136 605
- FR-A- 1 422 912
- JP-A- 2002 345 389
- US-A- 5 352 150
- US-B1- 6 234 890

## Description

### BACKGROUND

The invention relates to a dough handling apparatus comprising a conveyor device for dough comprising an dough inlet, a dough outlet, a supply container comprising an outlet opening for supplying dough to the conveyor device, wherein, in an operative position, the outlet opening connects to the dough inlet of the conveyor device, wherein the supply container is pivotable from the operative position into a pivoted-away position, and a helical feed device for conveying dough in the supply container towards the outlet opening.

The European Patent 0 994 653 discloses a filling machine comprising a machine frame structure in which there is disposed a delivery pump for, for example, sausage meat which is supplied from a supply container. The filling machine further comprises a supply container. As the supply container generally is arranged on top of the machine frame structure, it greatly impedes access for example to the delivery pump. Accordingly, the supply container is designed in such a way that it can be pivoted away to the side. Pivotal movement of the supply container away from the machine is required for example when the lower part of the delivery path or the delivery pump have to be cleaned.

The supply container comprises a helical feed device arranged in front of the outlet of the supply container. The helical feed device can be driven in rotation, and is arranged in such a way that it is pivoted together with the supply container. For driving the rotation of the helical feed device, the filling machine comprises a two-part drive ring for the helical feed device whose first ring part is supported in the machine frame structure and driven there, and whose second ring part carries the feed device and can be pivoted away together with the supply container. In the operative position of the supply container the second ring part is meshed to the first ring part so that the first ring part rotationally engages the second ring part for driving the feed device.

The filling machine of the state of the art is developed and predominantly used for filing sausage meat in a sausage casing. The use of such a machine for conveying dough for the production of bread, baguettes, French bread, buns, pizzas, and the like, does not provide optimal results.

Therefore the object of the present invention is to provide an alternative dough handling apparatus which is optimized for the handling of dough for the production of bread, baguettes, French bread, buns, pizzas, and the like.

It is respectfully noted that the Japanese Patent Publication 2002345389 describes a buckwheat noodle production machine for processing buckwheat dough into noodle ribbons. However, as described in more detail below, the production machine according to this Patent essentially differs from a dough handling apparatus of the present invention.

### SUMMARY OF THE INVENTION

According to a first aspect, the invention provides a dough handling apparatus as described in the attached claim 1. Accordingly, a dough handling apparatus of the present invention comprises among others:
a conveyor device for dough comprising a dough inlet, a dough outlet, a conveying chamber arranged between the dough inlet and the dough outlet, and a conveyor screw arranged in the conveying chamber,
a supply container comprising an outlet opening for supplying dough to the conveyor device, wherein, in an operative position, the outlet opening connects to the dough inlet of the conveyor device, wherein the supply container is pivotable from the operative position into a pivoted-away position, and
a helical feed device for conveying dough in the supply container towards the outlet opening, wherein the helical feed device is releasably mounted in an upper part of the dough inlet of the conveyor device when the supply container is in the pivoted-away position, wherein a first end of the helical feed device extends into the supply container, and a second end of the helical feed device extends toward the conveyor screw, wherein the second end is arranged near an outer circumference of the conveyor screw.

According to the invention, the first end of the helical feed device extends into the supply container, and the second end of the helical feed device is arranged near an outer circumference of the conveyor screw. This allows conveying and guiding the dough from the supply container substantially all the way through the dough inlet to a position near the outer circumference of the conveyor screw. This guidance all the way to the position near the outer circumference of the conveyor screw allows to substantially maintaining the structure of the dough delivered to the conveyor screw.

It is noted that the conveyor screw and the conveyor housing, together form a screw conveyor or auger conveyor. The conveyor screw preferably comprises a helical screw blade arranged on a shaft, which shaft is coupled to a drive motor for rotating the shaft and the helical screw blade around the longitudinal axis of the shaft.

In addition, the guidance all the way to the position near the outer circumference of the conveyor screw also allows to move substantially all the dough in the dough inlet toward the conveyor screw. Since the helical feed device of the prior art, as disclosed in the European Patent 0 994 653, extends only for a short distance in the feed arrangement below the second ring part, the dough in the feed arrangement is not conveyor towards the delivery pump, when the level of the dough is below a lower end of the helical feed device. This may not be a problem for sausage meat, but when using said prior art machine for bread dough, for example, the bread dough will remain in the feed arrangement below the helical feed device when there is not enough bread dough in the supply container to push the bread dough through the feed arrangement due to the action of the helical feed device. The portion of bread dough remaining in the feed arrangement, for example at the end of a production cycle, is not delivered to the delivery pump and is waste. Accordingly the helical feed device of the invention reduces this waste.

Furthermore, the helical feed device of the apparatus of the present invention is releasable mounted in an upper part of the dough inlet of the conveyor device when the supply container is in the pivoted-away position. The helical feed device of the present invention is not mounted in the pivotable part of the supply container. Thus when the supply container of the present invention is pivotable from the operative position into a pivoted-away position, the helical feed device of the present invention is not pivoted away together with the supply container, and remains in the dough inlet when the supply container is pivoted in the pivoted-away position. This allows the use of a helical feed device which extends much further into the dough inlet as in the prior art.

Since the helical feed device of the present invention is releasably mounted to the upper part of the dough inlet when the supply container is in the pivoted-away position, the helical feed device can be removed from the dough inlet, when the supply container is in the pivoted-away position. This allows an easy cleaning of the helical feed device, and provides access to the dough inlet, for example when the lower part of the dough inlet or the conveyor screw has to be cleaned.

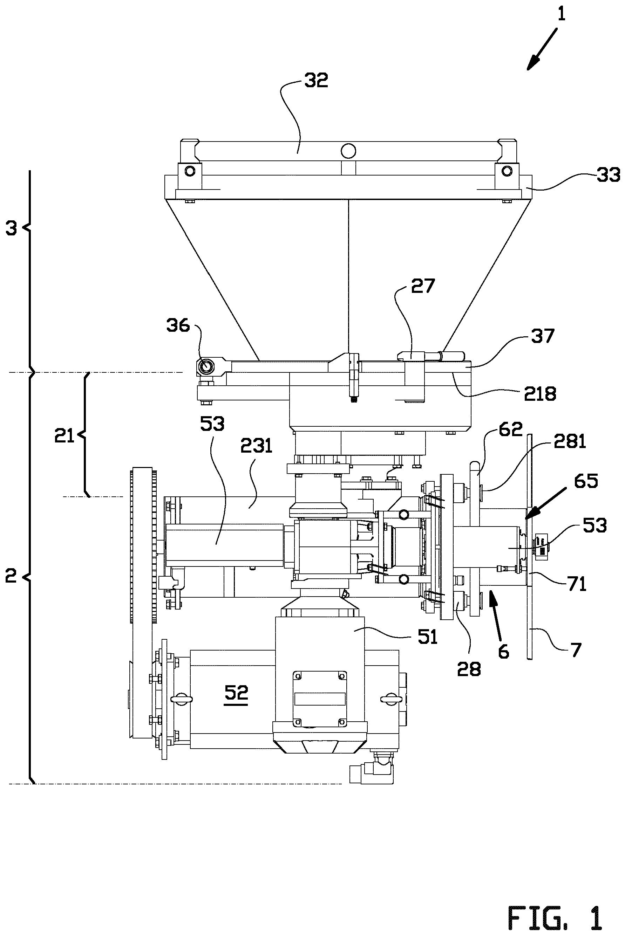

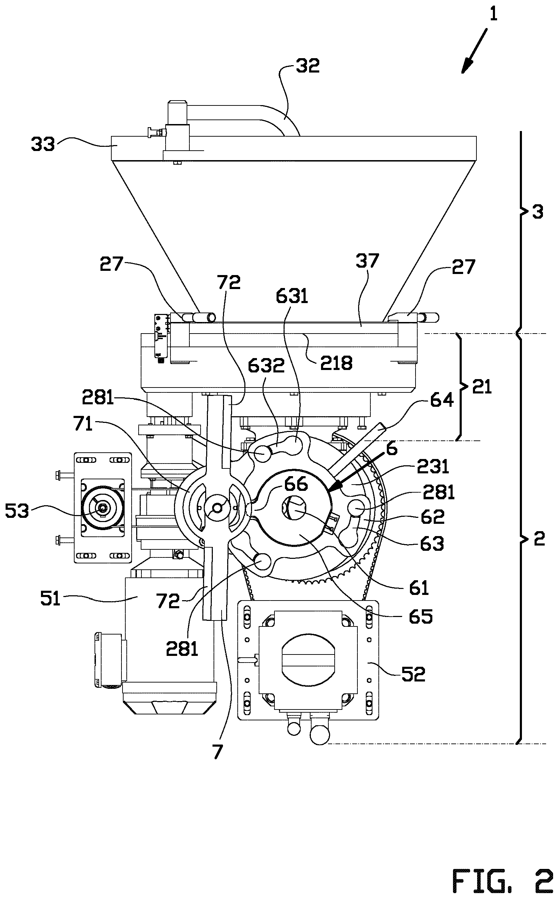

It is noted that the Japanese Patent Publication 2002345389 describes a buckwheat noodle production machine for processing buckwheat dough into noodle ribbons. As shown in figure 2 of this Patent Publication, the production machine comprises a conveyor device (transportation chamber 2) having a dough inlet (21), a dough outlet (nozzle plate 3), and a conveyor screw (1). In addition the production machine comprises a supply container (42), and a helical feed device (41). The helical feed device (41) is driven by a motor (43) and is provided with a speed reducer (44). As clearly shown in figures 1 and 2, the helical feed device (41), including its motor (43) and speed reducer (44), is mounted on top of the supply container (42). Accordingly, the helical feed device (41) is not mounted in an upper part of the dough inlet of the conveyor device when the supply container is in the pivoted-away position. In addition, as clearly indicated in the figures, the supply container (42) is bolted onto the conveyor device via the coupling flange (45). There is neither a hint, not a suggestion in JP 2002345389, that the supply container (42) is pivotable into a pivot-away position.

According to the invention, the supply container is connected to the conveyor device via a hinge, wherein the hinge is arranged for pivoting the supply container around a substantially horizontal axis.

According to the invention, the dough inlet comprises a substantially circle cylindrical part adjacent to the conveying chamber, wherein the second end of the helical feed device extends into the circle cylindrical part. According to this embodiment, in use, the dough in the supply container and the dough inlet is guided by the helical feed device at least into the circle cylindrical part of the dough inlet. For moving or pushing the dough further along a short distance in this circle cylindrical part, the guidance of the helical feed device is required to a lesser extent, since the dough is not pushed forward in a cone-shaped passage as in the prior art, as disclosed in the European Patent 0 994 653, and is not compressed in a sideward direction in the circle cylindrical part.

According to the invention, the dough handling apparatus comprises a drive ring which is rotatable attached to the dough inlet of the conveyor device, wherein the helical feed device comprises a mounting ring, wherein the mounting ring is removable arranged on top of the drive ring to provide a rotationally fixed coupling between the mounting ring and the drive ring. Accordingly, the drive ring is preferably fixedly attached to the dough inlet, for example via a bearing which allows the drive ring to rotate with respect to the dough inlet. The drive ring supports the mounting ring. In order to drive the drive ring, there is a rotationally fixed coupling between the drive ring and the mounting ring.

In an embodiment, the second end of the helical feed device is arranged to provide a substantial circle cylindrical surface of revolution. According to this embodiment, the second end of the helical feed device provides a substantial circle cylindrical helical screw which provides suitable guidance and conveying of the dough towards the conveyor screw in the conveyor device. Preferably the circle cylindrical surface of revolution is arranged adjacent to an inner wall of the substantially circle cylindrical part of the dough inlet.

In an embodiment, the dough inlet comprises a cone-shaped part between the circle cylindrical part and the upper part. The cone-shaped part provides a smooth transition from the supply container to the conveying chamber. The helical feed device preferably extends at least substantially along the complete length of the cone-shaped part for conveying and guiding the dough through said cone-shaped part.

In an embodiment, the helical feed device comprises a spiral blade which extends up to the second end of the helical feed device. In other words, the second end is formed by said spiral blade. Accordingly, the spiral blade extends up to the end of the helical feed device which faces the conveyor screw in the conveyor device.

In an embodiment, the helical feed device comprises a shaftless spiral or centerless conveyor screw. This allows the use of a stator which extends into the center of the conveyor screw, and is provided with a fixed helical screw blade. Preferably the handedness of the fixed helical screw blade of the stator is in a opposite direction with respect to the handedness of the helical feed device. For example, if the helical feed device comprises a right-handed spiral, then the stator comprises a left-handed fixed helical screw blade. When the helical feed device is driven, the combination of the fixed stator and the rotating helical feed device yields a positive transport action on the dough in the supply container.

In an embodiment, the drive ring comprises a support surface, wherein the mounting ring comprises a mounting surface, wherein the mounting surface abuts the support surface when the mounting ring is removably arranged on top of the drive ring.

In an embodiment, the drive ring comprises a set of protrusions extending out of the support surface, and wherein the mounting ring comprises a set of recesses, and wherein each protrusion is arranged to fit in one of said recesses when the mounting ring is removably arranged on top of the drive ring. Alternatively or additionally, in an embodiment, the mounting ring comprises a set of protrusions extending out of the mounting surface, and wherein the drive ring comprises a set of recesses, and wherein each protrusion is arranged to fit in one of said recesses when the mounting ring is removably arranged on top of the drive ring. The helical feed device is arranged to rotate around a rotation axis, and the protrusions extend preferably in a direction substantially parallel to said rotation axis. The combined protrusions and recesses provide a form closure which is arranged to provide a rotationally fixed coupling at least in a direction of the rotation of the helical feed device. Preferably the coupling between the mounting ring and the drive ring is arranged to allow a substantially free translation of the mounting ring in a direction along the rotation axis, at least when the supply container is arranged in the pivoted-away position, and the mounting ring with the helical feed device can easily be removed from the drive ring by moving the protrusions out of the recesses.

In an embodiment, the supply container is hingedly attached to the upper part of the dough inlet. Preferably, the mounting ring of the helical feed device is confined between the drive ring and the supply container in the operative position, in particular the part of the supply container near the outlet opening. By pivoting the supply container into the pivoted-away position, the confinement of the mounting ring is removed, and the helical feed device can be taken out of the dough inlet.

In an embodiment, the conveyor screw comprises an inlet-side spindle section and an outlet-side spindle section, wherein the inlet-side spindle section has a larger pitch then the outlet-side spindle section. In this Patent description, the pitch of the spindle of the conveyor screw is defined as the distance from the crest of one thread to the next. Thus the inlet-side spindle section has a courser thread than the outlet-side spindle section.

In an embodiment, the conveyor screw is a first conveyor screw, wherein the conveyor device comprises a second conveyor screw, and wherein the first conveyor screw and the second conveyor screw comprise interengaging helical flights. The first and second conveyor screw are preferably arranged adjacent to each other, wherein the longitudinal directions of the first and second conveyor screws extends substantially parallel. The flights of the first conveyor screw are arranged in the gap between the consecutive flights of the second conveyor screw, and *vice versa.* Thus a second conveyor screw combingly engages with the first conveyor screw.

In an embodiment, the dough handling apparatus further comprising a die arranged at the dough outlet of the conveyor device, wherein the die comprises an opening at a side facing away from the conveying chamber for dispensing dough.

In an embodiment, the apparatus comprises a knife which is arranged to move in front of the opening for cutting dispensed dough. The combination of the die which allows to deliver a dough strand having a substantially constant cross-section, and a knife for dividing said dough strand into substantially equal portions, allows to use the dough handling apparatus as a metering device as, for example, described in the International Application WO 2009/091247. Preferably, the rate of extrusion of the dough strand and the cutting frequency of the knife are controlled in order to provide portions of dough of substantially equal weight, or a desired weight, respectively.

In an embodiment, the apparatus comprises a rotatable knife which is arranged to rotate in front of the opening for cutting dispensed dough. Preferably, the rate of extrusion of the dough strand and the rotation velocity of the rotating knife are controlled in order to provide portions of dough of substantially equal weight, or a desired weight, respectively.

In an embodiment, the die comprises an outward facing, substantially flat surface, wherein the flat surface comprises the opening, and wherein the movable or rotatable knife comprises an abutment member, wherein the abutment member is arranged to abut at least a part of the flat surface. In an embodiment, preferably comprising the rotatable knife, the abutment member comprises a substantially circular ring part, wherein the ring part is arranged to abut at least a part of the flat surface. This allows arranging the movable or rotatable knife to be movable close to the flat surface of the die and, in use, to cut a strand of dough close to the opening. This provides dough portions with a more precise controlled weight and/or a more narrow weight distribution of a series of dough portions.

In an embodiment, the die comprises a cam extending towards a mounting position of the movable or rotatable knife, wherein the flat surface extends over said cam, and wherein the abutment member is arranged to abut the flat surface part of the cam. In the embodiment where the abutment member comprises the substantially circular ring part, the ring part of the rotatable knife is arranged to abut the flat surface part of the cam.

In an embodiment, the die is coupled to the dough outlet by means of a twist-lock mount or bayonet mount. Such a twist-lock mount or bayonet mount is in particular advantageous in combination with a die comprising a cam and a rotatable knife. In this case, when rotating the twist-lock mount or the bayonet mount for disconnecting the die, the amount of rotation is arranged to move the cam out of engagement of the ring part of the rotatable knife. Thus the die can be removed without the need of removing the rotatable knife.

In an embodiment, at least the conveying chamber of the conveyor device is arranged inside an enclosure, wherein the dough handling apparatus comprises a cooling device for cooling the inside of the enclosure and/or for providing a coolant fluid to coolant conduits which are arranged in a casing of the conveyor device. The cooling device substantially prevents a heating up of the dough while it is conveyed and compressed in the conveying chamber of the conveyor device, which is advantageous to the quality of the final dough product.

According to a second aspect, the invention provides a use of a dough handling apparatus as described above for conveying dough, preferably for the production of bread, baguettes, French bread, buns, pizzas, and the like.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a side view of an example of a dough handling apparatus of the invention,
Figure 2 shows a front view of the example of figure 1,
Figure 3 shows a cross-section view of an example of a dough handling apparatus of the invention in a direction substantially perpendicular to the longitudinal direction of the conveyor screw,
Figure 4A shows a cross-section view of an example of a dough handling apparatus of the invention in a direction substantially parallel to the longitudinal direction of the conveyor screw, with the supply container in the operative position,
Figure 4B shows a cross-section view of the example of figure 4A, with the supply container in the pivoted-away position,
Figure 5 shows a vertical cross-section view of an example of a dough handling apparatus of the invention, at least partially arranged in an machine enclosure, and
Figure 6 shows a horizontal cross-section view of the apparatus of figure 5.

### DETAILED DESCRIPTION OF THE INVENTION

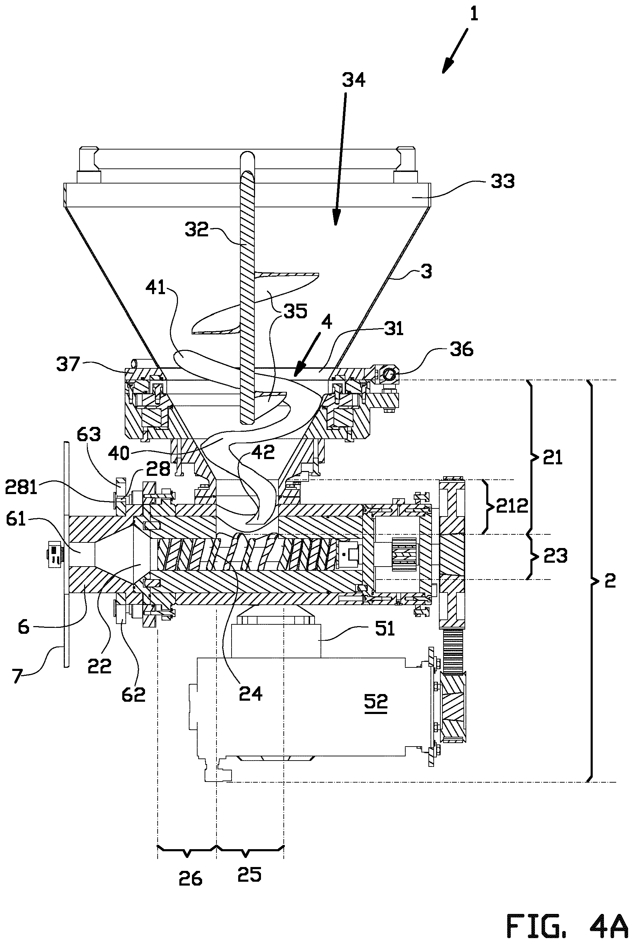

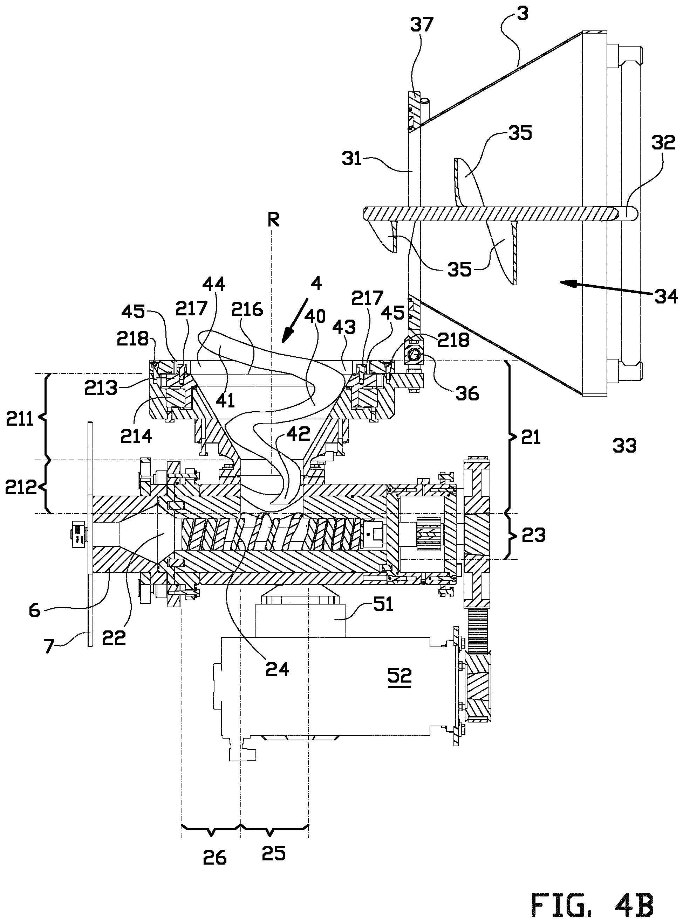

The figures show examples of a dough handling apparatus 1 according to the invention. The dough handling apparatus 1 comprises a conveyor device 2 for dough comprising a conveying chamber 23 arranged in a casing 231, between a dough inlet 21 and a dough outlet 22. As shown in figures 4A and 4B, a conveyor screw 24 is arranged in the conveying chamber 23.

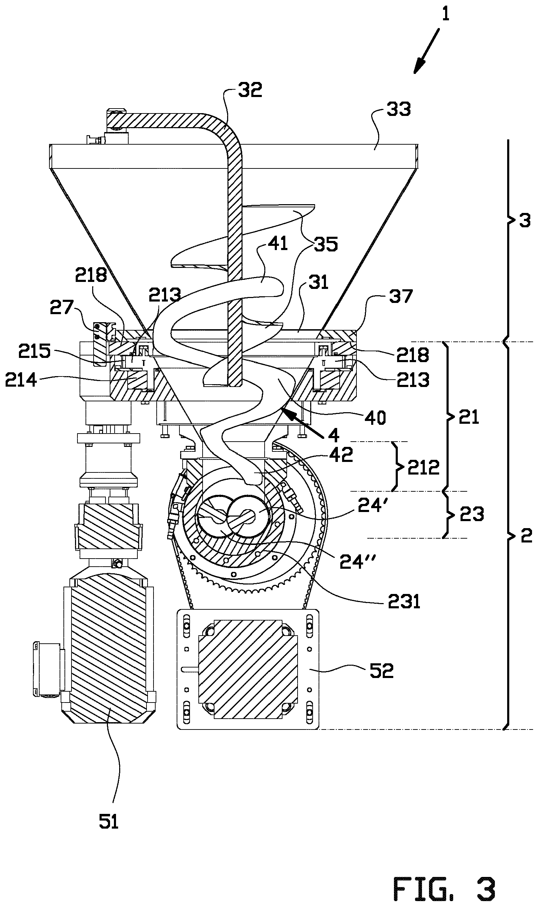

In the example shown in figure 3, the conveyor screw is a first conveyor screw 24', and the conveyor device comprises a second conveyor screw 24" which combingly engages with the first conveyor screw 24'. As clearly shown in figure 3, the first conveyor screw 24' and the second conveyor screw 24" comprise interengaging helical flights. Thus the flights of the first conveyor screw 24' are arranged in the gap between the consecutive flights of the second conveyor screw 24", and *vice versa.*

In the example shown in figures 4A and 4B, the conveyor screw 24 comprises an inlet-side spindle section 25 and an outlet-side spindle section 26, wherein the inlet-side spindle section 25 has a larger or wider pitch then the outlet-side spindle section 26. It is noted that the use of a double conveyor screw 24', 24" as shown in figure 3 can also be combined with a conveyor screw 24 having spindle sections 25, 26 with a different pitch as shown in figures 4A and 4B.

The dough handling apparatus 1 further comprises a supply container 3. The supply container 3 comprises a cone-shaped hopper with a wide inlet opening 34 surrounded by an upper edge 33, and a narrow outlet opening 31 for supplying dough to the conveyor device 2. In an operative position, the outlet opening 31 connects to the dough inlet 21 of the conveyor device 2. The supply container 3 is pivotable from the operative position as shown in figure 4A, into a pivoted-away position as shown in figure 4B. The supply container 3 is hingedly attached to the upper part of the dough inlet 21 via a hinge 36. The hinge 36 is arranged for pivoting the supply container 3 around a substantially horizontal axis, which in figure 4A and 4B extends substantially perpendicular out of the plane of the drawing.

As shown in figures 3, 4A and 4B, for example, the supply container 3 may be provided with a stator 32, which is removably connected to the upper edge 33 of the supply container 3. The stator 32 as shown in the figures is provided with a fixed helical screw blade 35.

Furthermore, the dough handling apparatus 1 comprises a helical feed device 4 for conveying dough in the supply container 3 towards the outlet opening 31. The helical feed device 4 is releasably mounted in an upper part of the dough inlet 21 of the conveyor device 2, as will be described in more detail below. The helical feed device 4 comprises a helical screw member 40. In the operative position of the supply container 3, a first end 41 at the upper side of the helical screw member 40 extends into the supply container 3, and a second end 42 at the lower side of the helical screw member 40 extends toward the conveyor screw 24. The second end 42 is arranged near an outer circumference of the conveyor screw 24, as shown in figures 3, 4A and 4B. When the stator 32 is arranged in the supply container 3, the upper part of the helical feed device 4, in particular the helical screw member 40 thereof, surrounds the lower part of the stator 32.

As shown in the figures 3, 4A and 4B, and more clearly indicated in figure 4B, the dough inlet 21 comprises a cone shaped part 211 at a side of the dough inlet 21 facing said supply container 3, and a circle cylindrical part 212 at a side of the dough inlet 21 adjacent to the conveying chamber 23. As shown in the examples of figures 3, 4A and 4B, the second end 42 of the helical screw member 40 extends into the circle cylindrical part 212. Preferably, the second end 42 of the helical screw member 40 is arranged to provide a substantial circle cylindrical surface of revolution. Accordingly, the second end 42 of the helical screw member 40 provides a substantial circle cylindrical helical screw which provides suitable guidance and conveying of the dough towards the conveyor screw 24', 24" in the conveyor device 2.

As schematically shown in figures 3, 4A, 4B and 5, the helical screw member 4, 40 comprises a spiral blade which forms the second end 42 of the helical screw member 4, 40. The spiral blade extends up to the end 42 of the helical feed device 4, 40 which faces the conveyor screw(s) 24, 24', 24" in the conveyor device 2.

The dough handling apparatus, in particular the dough inlet 21 thereof, comprises a drive ring 213 which is rotatable attached at the upper part of the dough inlet 21. The drive ring 213 is fixedly attached to the upper part of the dough inlet via a bearing 214 which allows the drive ring to rotate with respect to the upper part of the dough inlet 21. The drive ring 213 is provided with a series of teeth 215 provided at an outer circumferential surface of the drive ring 213, which teeth 215 are arranged to mesh with a pinion (not shown) which is coupled to a drive motor 51 for driving a rotation of the drive ring 213 around a rotation axis R via the pinion.

The drive ring 213 comprises a support surface 216, which comprises an upward facing flat ring-shaped surface. The support surface 216 is arranged in a plane which extends substantially perpendicular to the rotation axis R. The support surface is provided with a series of protrusions 217 in the shape of substantially cylindrical members, which extend in a direction substantially perpendicular to the support surface 216, preferably substantially parallel to the rotation axis R.

The helical feed device 4 comprises a mounting ring 43 which surrounds the helical screw member 40. The Helical screw member 40 is fixedly attached to the mounting ring 43, and preferably the mounting ring 43 and the helical screw member 40 are integrally formed. The mounting ring 43 comprises a mounting surface 44, wherein the mounting surface 44 abuts the support surface 216 when the mounting ring 43 is arranged on top of the drive ring 213. The mounting ring 43 comprises a set of recesses 45 which are arranged to accommodate the protrusions 217 of the drive ring 213. The recesses 45 according to the present examples comprises substantially cylindrical shaped, blind holes, which debouch in the mounting surface 44 and extend in a direction substantially perpendicular to the support surface 44, preferably substantially parallel to the rotation axis R.

In the operative position as shown in figures 3 and 4A, the mounting ring 43 is removable arranged on top of the drive ring 213, wherein the protrusions 217 are arranged in the recesses 45 for providing a rotationally fixed coupling between the mounting ring 43 and the drive ring 213. Furthermore, the supply container 3 is provided with a flange member 37. In the operative position, the flange member 37 is arranged to abut against an upper edge 218 of the dough inlet 21, and is locked in this position by means of a set of locking devices 27. In this situation, the mounting ring 43 is confined between the drive ring 213 and the flange member 37.

When the locking devices 27 are arranged in an un-locking state, the supply container 3 can be pivoted into a pivoted-away position as shown in figure 4B. The mounting ring 43 can freely move upwards in a direction substantially parallel to the rotation axis R, the protrusions 217 slide out of engagement with the recesses 45, and the helical feed device 4 can easily be removed from the dough handling apparatus 1.

It is noted that in the examples as described above, the drive ring 213 is provided with protrusions 217 and the mounting ring 43 is provided with matching recesses 45. Alternatively or additionally, the mounting ring 43 is provided with a set of protrusions (not shown) extending out of the mounting surface, and the drive ring is provided with a set of matching recesses (not shown), wherein each protrusion is arranged in one of said recesses when the mounting ring 43 is removably arranged on top of the drive ring 213.

As further indicated in the figures, the dough handling apparatus comprises a die 6 arranged at the dough outlet 22 of the conveyor device 2. The die 6 comprises an opening 61 at a side facing away from the conveying chamber 23 for dispensing dough which is pushed towards the die 6 by means of the conveyor screw 24.

The die 6 is coupled to the dough outlet 22 by means of a twist-lock mount comprising a twist-lock catch, or a bayonet mount comprising a bayonet catch. Accordingly the die 6 is provided with an outward extending flange 62, which comprises a series of slots 63. The slots 63 are substantially evenly distributed around the circumference of the die 6. Each slot 63 comprises a first portion 631 through which the head 281 of a stud 28 will pass and a second portion 632 through which the stud 28 will pass, but the head 281 of the stud 28 will not pass. As indicated in figure 2, the slots 63 have a shape of a circle section in order to allow a rotation of the die 6 when the studs 28 are arranged in the corresponding slots 63.

At the dough outlet 22 of the conveyor device 2, a series of substantially round studs 28 are arranged to extend in the extension of the conveying chamber 23, in the direction toward the die 6. Each round stud 28 comprises a round head 281, which has a larger diameter than the stud 28. When mounting the die 6 onto the dough outlet 22 at the end of the conveying chamber 23, the first portion 631 of the slots 63 is placed over the studs 28 in such a way that the heads 281 of the studs 28 protrude out of the flange 62 at a side facing away from the conveying chamber 23. Subsequently, the die 6 is rotated using the handle 64 into a locking position as shown in figure 2, wherein the studs 28 are placed in the second portion 632 of the slots 63 and the heads 281 of the studs 28 abut the surface of the flange 62 at a side facing away from the conveying chamber 23.

When an amount of dough is provided in the supply container 3, and the conveyor device 2 is driven by the drive or motor 52, the dough handling apparatus of the present invention conveys the dough towards the die 6 and a substantially continues strand of dough is extruded out of the opening 61 of the die 6. When the dough handling apparatus is used for providing separate portions of dough, the extruded stand is cut in the desired portions using a knife 7. The knife 7 is arranged for carrying out a cutting motion in front of the opening 61, and is able to cut the extruded dough strand into sections. Although the knife may be arranged to perform a substantially linear and/or reciprocating movement, like a guillotine, it is preferred to use a rotatable knife 7, as shown in figure 1. The rotatable knife 7 is arranged to rotate in front of the opening 61 of the die 6 for cutting dispensed dough.

In the examples shown in the figures, the die 6 comprises an outward facing, substantially flat surface 65, wherein the flat surface 65 comprises the opening 61. The rotatable knife 7 comprises a substantially circular ring part 71, wherein the ring part 71 is arranged to abut at least a part of the flat surface 65. As shown in figure 2, the die 6 comprises a cam 66 extending towards the rotatable knife 7. The flat surface 65 extends over said cam 66, wherein the ring part 71 of the rotatable knife 7 is arranged to abut the flat surface part of the cam 66. This allows to move the knifes 72 of the rotatable knife 7 over the flat surface 65, close to the opening 61 of the die 6. In use, when the rotatable knife is driven by the drive or motor 53, the extruded dough is cut immediately after it has left the opening 61, which increases the accuracy of cutting the strand of dough into dough portions of substantially equal weight, or a desired weight, respectively.

The cam 66 and the ring part 71, in combination with the twist-lock mount or bayonet mount, is further arranged to move the cam 66 out of engagement with the ring part 71, when the die 66 is rotated to move out of the locking position to a position wherein the studs 28 are arranged at the first portion 631 of the slots 63. The die 6 can now be removed from the dough outlet 22 of the conveying device 2, without having to remove the rotatable knife 7.

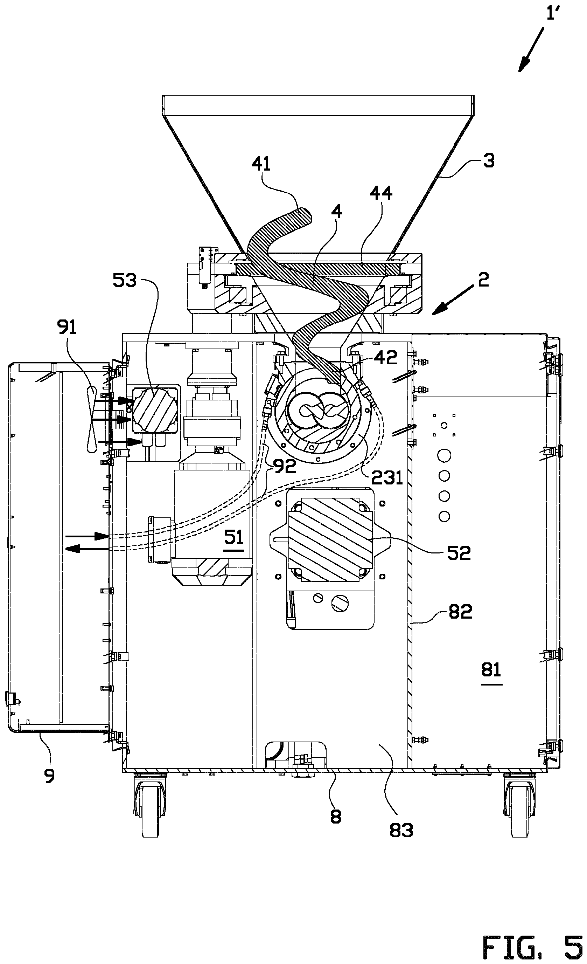

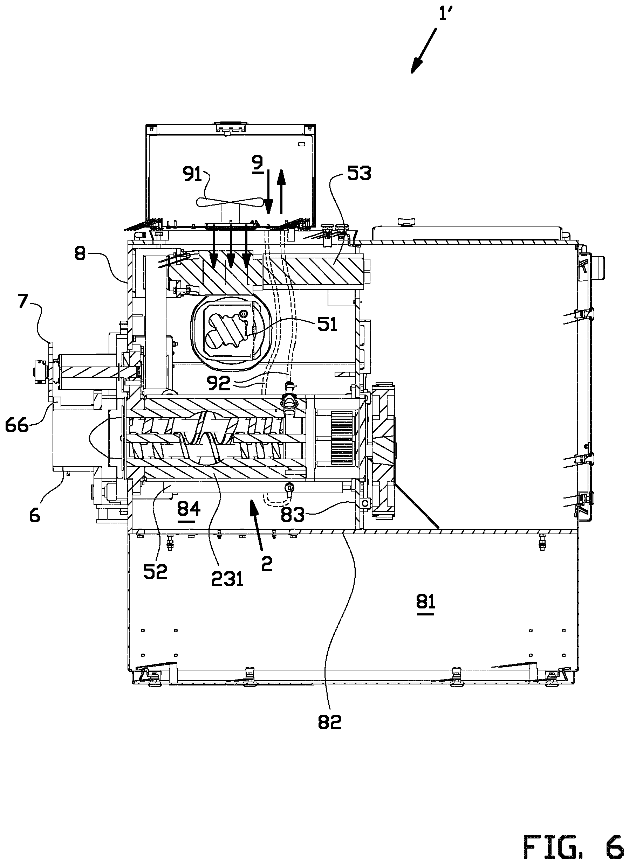

In the last example of a dough handling apparatus 1', shown in figures 5 and 6, the conveyor device 2 is for the most part arranged inside an enclosure 8. Only part of the dough inlet 21 is arranged on top of the enclosure 8. In addition the supply container 3 is arranged on top of the enclosure 8. In particular, the conveying chamber 23 and the drive motors 51, 52, 53 are arranged inside said enclosure 8, in particular in a substantially separate compartment inside said enclosure, which separate compartment is delimited by substantially vertical walls 82, 83. Furthermore, the enclosure 8 is provided with a substantially separate compartment 81 for a controlling unit which controls the operation of the dough handling apparatus.

In the example as shown in figure 5 and 6, the dough handling apparatus 1' comprises a cooling device 9 for cooling the inside of the enclosure 8. In particular, the cooling device 9 is mounted at a side of the enclosure 8 and is arranged adjacent to the compartment 84 containing the conveying chamber 23, and is provided with a blower 91 for blowing cool air into said compartment 84. Alternatively or additionally, the cooling device 9 is connected via a set of tubes 92 to cooling conduits inside the casing 231 of the conveying chamber 23 or cooling jacket around the conveying chamber for cooling the conveying chamber 23 by means of a coolant or cooling fluid. The cooling device 9 prevents a heating up of the dough while it is conveyed and compressed in the conveying chamber 23 of the conveyor device 2.

## Claims

1. A dough handling apparatus (1) comprising:
a conveyor device (2) for dough comprising a dough inlet (21), a dough outlet (22), a conveying chamber (23) arranged between the dough inlet and the dough outlet, and a conveyor screw (24, 24', 24") arranged in the conveying chamber,
a supply container (3) comprising an outlet opening (31) for supplying dough to the conveyor device, wherein, in an operative position, the outlet opening (31) connects to the dough inlet (21) of the conveyor device, and
a helical feed device (4) for conveying dough in the supply container (3) towards the outlet opening (31), wherein a first end (41) of the helical feed device extends into the supply container (3), and a second end (42) of the helical feed device (4) extends toward the conveyor screw (24, 24', 24"), wherein the second end (42) is arranged near an outer circumference of the conveyor screw (24, 24', 24"),
**characterised in that** the supply container is pivotable from the operative position into a pivoted-away position,
that the helical feed device is releasably mounted in an upper part of the dough inlet of the conveyor device when the supply container is in the pivoted-away position,
that the supply container (3) is connected to the conveyor device (2) via a hinge (36), wherein the hinge is arranged for pivoting the supply container (3) around a substantially horizontal axis,
that the dough inlet (21) comprises a substantially circle cylindrical part (212) adjacent to the conveying chamber (23), wherein the second end (42) of the helical feed device (4) extends into the circle cylindrical part (212), and
that the dough handling apparatus comprises a drive ring (213) which is rotatable attached to the dough inlet (21) of the conveyor device, and wherein the helical feed device (4) comprises a mounting ring (43), wherein the mounting ring (43) is removable arranged on top of the drive ring (213) to provide a rotationally fixed coupling between the mounting ring (43) and the drive ring (213).

2. Dough handling apparatus according to claim 1, wherein the dough inlet comprises a cone shaped part (211) between the circle cylindrical part (212) and the upper part.

3. Dough handling apparatus according to claim 2, wherein the second end (42) of the helical feed device (4) is arranged to provide a substantial circle cylindrical surface of revolution.

4. Dough handling apparatus according to any one of the claims 1 - 3, wherein the helical feed device (4) comprises a spiral blade (40) which extends up to the second end (42) of the helical feed device.

5. Dough handling apparatus according to any one of the claims 1 - 4, wherein the drive ring (213) comprises a support surface (216), wherein the mounting ring (43) comprises a mounting surface (44), wherein the mounting surface (44) abuts the support surface (216) when the mounting ring (43) is removably arranged on top of the drive ring (213).

6. Dough handling apparatus according to any one of the claims 1 - 5, wherein the drive ring (213) comprises a set of protrusions (217) extending out of the support surface, and wherein the mounting ring (43) comprises a set of recesses (45), and wherein each protrusion (217) is arranged to fit in one of said recesses (45) when the mounting ring (43) is removably arranged on top of the drive ring (213), or wherein the mounting ring (43) comprises a set of protrusions extending out of the mounting surface, and wherein the drive ring (213) comprises a set of recesses, and wherein each protrusion is arranged to fit in one of said recesses when the mounting ring is removably arranged on top of the drive ring.

7. Dough handling apparatus according to any one of the claims 1 - 6, wherein the conveyor screw comprises an inlet-side spindle section (25) and an outlet-side spindle section (26), wherein the inlet-side spindle section (25) has a wider or larger pitch then the outlet-side spindle section (26).

8. Dough handling apparatus according to any one of the claims 1 - 7, wherein the conveyor screw is a first conveyor screw (24'), wherein the conveyor device comprises a second conveyor screw (24"), and wherein the first conveyor screw (24') and the second conveyor screw (24") comprise interengaging helical flights.

9. Dough handling apparatus according to any one of the claims 1 - 8, further comprising a die (6) arranged at the dough outlet (22) of the conveyor device (2), wherein the die (6) comprises an opening (61) at a side facing away from the conveying chamber (23) for dispensing dough,
preferably wherein the die (6) is coupled to the dough outlet (22) by means of a twist-lock mount or bayonet mount.

10. Dough handling apparatus according to claim 9, wherein the apparatus comprises a knife (7), which is arranged to move in front of the opening (61) for cutting dispensed dough.

11. Dough handling apparatus according to claim 10, wherein the die (6) comprises an outward facing, substantially flat surface (65), wherein the flat surface comprises the opening (61), and wherein the knife (7) comprises an abutment member (71), wherein the abutment member (71) is arranged to abut at least a part of the flat surface (65),
preferably wherein the die (6) comprises a cam (66) extending towards a mounting position of the knife (7), wherein the flat surface (65) extends over said cam (66), and wherein the abutment member (71) of the knife is arranged to abut the flat surface part of the cam (66).

12. Dough handling apparatus according to claim 10 or 11, wherein the knife comprises a rotatable knife, which is arranged to rotate in front of the opening for cutting dispensed dough.

13. Dough handling apparatus according to claim 11, wherein the knife comprises a rotatable knife, which is arranged to rotate in front of the opening for cutting dispensed dough, and wherein the abutment member comprises a substantially circular ring part, wherein the ring part is arranged to abut at least a part of the flat surface.

14. Dough handling apparatus according to any one of the claims 1 - 13, wherein at least the conveying chamber of the conveyor device is arranged inside an enclosure, wherein the dough handling apparatus comprises a cooling device for cooling the inside of the enclosure and/or for providing a coolant fluid to coolant conduits which are arranged in a casing of the conveyor device.

15. Use of a dough handling apparatus according to any one of the claims 1 to 14 for conveying dough.

## Patentansprüche

1. Eine Teigbearbeitungsvorrichtung (1), die folgende Merkmale aufweist:
eine Fördereinrichtung (2) für Teig mit einem Teigeinlass (21), einem Teigauslass (22), einer Förderkammer (23), die zwischen dem Teigeinlass und dem Teigauslass angeordnet ist, und einer Förderschraube (24, 24', 24"), die in der Förderkammer angeordnet ist,
einen Zuführbehälter (3) mit einer Auslassöffnung (31) zum Zuführen von Teig zu der Fördereinrichtung, wobei in einer Betriebsposition die Auslassöffnung (31) eine Verbindung zu dem Teigeinlass (21) der Fördereinrichtung herstellt, und
eine spiralförmige Einspeiseinrichtung (4) zum Fördern von Teig in dem Zuführbehälter in Richtung der Auslassöffnung (31),
wobei eine erstes Ende (41) der spiralförmigen Einspeiseinrichtung sich in den Zuführbehälter (3) erstreckt und ein zweites Ende (42) der spiralförmigen Einspeiseinrichtung (4) sich in Richtung der Förderschraube (24, 24', 24") erstreckt, wobei das zweite Ende (42) nahe an einem Außenumfang der Förderschraube (24, 24', 24") angeordnet ist,
**dadurch gekennzeichnet, dass** der Zuführbehälter aus der Betriebsposition in eine weggeschwenkte Position schwenkbar ist,
dass die spiralförmige Einspeiseinrichtung lösbar in einem oberen Teil des Teigeinlasses der Fördereinrichtung befestigt ist, wenn sich der Zuführbehälter in der weggeschwenkten Position befindet,
dass der Zuführbehälter (3) über ein Gelenk (36) mit der Fördereinrichtung (2) verbunden ist, wobei das Gelenk zum Schwenken des Zuführbehälters (3) um eine im Wesentlichen horizontale Achse angeordnet ist,
dass der Teigeinlass (21) ein im Wesentlichen kreisförmig zylindrisches Teil (212) benachbart zu der Förderkammer (23) aufweist, wobei sich das zweite Ende (42) der spiralförmigen Einspeiseinrichtung (4) in das kreisförmig zylindrische Teil (212) erstreckt, und
dass die Teigbearbeitungsvorrichtung einen Antriebsring (213) aufweist, der drehbar an dem Teigeinlass (21) der Fördereinrichtung angebracht ist, und wobei die spiralförmige Einspeiseinrichtung (4) einen Befestigungsring (43) aufweist, wobei der Befestigungsring (43) lösbar auf dem Antriebsring (213) angeordnet ist, um eine drehmäßig fixierte Kopplung zwischen dem Befestigungsrichtung (43) und dem Antriebsring (213) bereitzustellen.

2. Teigbearbeitungsvorrichtung gemäß Anspruch 1, bei der der Teigeinlass ein kegelförmiges Teil (211) zwischen dem kreisförmig zylindrischen Teil (212) und dem oberen Teil aufweist.

3. Teigbearbeitungsvorrichtung gemäß Anspruch 2, bei der das zweite Ende (42) der spiralförmigen Einspeiseinrichtung (4) angeordnet ist, um eine im Wesentlichen kreisförmig zylindrische Umdrehungsoberfläche bereitzustellen.

4. Teigbearbeitungsvorrichtung gemäß einem der Ansprüche 1 - 3, bei der die spiralförmige Einspeiseinrichtung (4) ein Spiralblatt (40) aufweist, das sich bis zu dem zweiten Ende (42) der spiralförmigen Einspeiseinrichtung erstreckt.

5. Teigbearbeitungsvorrichtung gemäß einem der Ansprüche 1 - 4, bei der der Antriebsring (213) eine Trägeroberfläche (216) aufweist, wobei der Befestigungsring (43) eine Befestigungsoberfläche (44) aufweist, wobei die Befestigungsoberfläche (44) an die Trägeroberfläche (216) anstößt, wenn der Befestigungsring (43) lösbar auf dem Antriebsring (213) angeordnet ist.

6. Teigbearbeitungsvorrichtung gemäß einem der Ansprüche 1 - 5, bei der der Antriebsring (213) einen Satz von Vorsprüngen (217) aufweist, die sich aus der Trägeroberfläche heraus erstrecken, und bei der der Befestigungsring (43) einen Satz von Ausnehmungen (45) aufweist, und wobei jeder Vorsprung (217) angeordnet ist, um in eine der Ausnehmungen (45) zu passen, wenn der Befestigungsring (43) lösbar auf dem Antriebsring (213) angeordnet ist, oder wobei der Befestigungsring (43) einen Satz von Vorsprüngen aufweist, die sich aus der Befestigungsoberfläche heraus erstrecken, und wobei der Antriebsring (213) einen Satz von Ausnehmungen aufweist, und wobei jeder Vorsprung angeordnet ist, um in eine der Ausnehmungen zu passen, wenn der Befestigungsring lösbar auf dem Antriebsring angeordnet ist.

7. Teigbearbeitungsvorrichtung gemäß einem der Ansprüche 1 - 6, bei der die Förderschraube einen einlassseitigen Spindelabschnitt (25) und einen auslassseitigen Spindelabschnitt (26) aufweist, wobei der einlassseitige Spindelabschnitt (25) eine breitere oder größere Ganghöhe aufweist als der auslassseitige Spindelabschnitt (26).

8. Teigbearbeitungsvorrichtung gemäß einem der Ansprüche 1 - 7, bei der die Förderschraube eine erste Förderschraube (24') ist, wobei die Fördereinrichtung eine zweite Förderschraube (24") aufweist, und wobei die erste Förderschraube (24') und die zweite Förderschraube (24") ineinandergreifende spiralförmige Gänge aufweisen.

9. Teigbearbeitungsvorrichtung gemäß einem der Ansprüche 1 - 8, die ferner eine Form (6) aufweist, die an dem Teigauslass (22) der Fördereinrichtung (2) angeordnet ist, wobei die Form (6) eine Öffnung (61) an einer Seite, die von der Förderkammer (23) weg zeigt, zum Abgeben von Teig aufweist,
wobei vorzugsweise die Form (6) mit dem Teigauslass (22) mittels einer Twist-Lock-Befestigung oder einer Bajonettbefestigung gekoppelt ist.

10. Teigbearbeitungsvorrichtung gemäß Anspruch 9, wobei die Vorrichtung ein Messer (7), das angeordnet ist, um sich vor der Öffnung (61) zu bewegen, zum Schneiden abgegebenen Teigs aufweist.

11. Teigbearbeitungsvorrichtung gemäß Anspruch 10, bei der die Form (6) eine nach außen zeigende im Wesentlichen flache Oberfläche (65) aufweist, wobei die flache Oberfläche die Öffnung (61) aufweist, und wobei das Messer (7) ein Anstoßbauteil (71) aufweist, wobei das Anstoßbauteil (71) angeordnet ist, um an zumindest einen Teil der flachen Oberfläche (65) anzustoßen,
wobei vorzugsweise die Form (6) einen Nocken (66) aufweist, der sich in Richtung einer Befestigungsposition des Messers (7) erstreckt, wobei sich die flache Oberfläche (65) über den Nocken (66) erstreckt, und wobei das Anstoßbauteil (71) des Messers angeordnet ist, um an den Flachoberflächenteil des Nockens (66) anzustoßen.

12. Teigbearbeitungsvorrichtung gemäß Anspruch 10 oder 11, bei der das Messer (7) ein drehbares Messer, das angeordnet ist, um sich vor der Öffnung (61) zu drehen, zum Schneiden abgegebenen Teigs aufweist.

13. Teigbearbeitungsvorrichtung gemäß Anspruch 11, bei der das Messer (7) ein drehbares Messer, das angeordnet ist, um sich vor der Öffnung (61) zu drehen, zum Schneiden abgegebenen Teigs aufweist, und bei der das Anstoßbauteil (71) ein im Wesentlichen kreisförmiges Ringteil aufweist, wobei das Ringteil angeordnet ist, um an zumindest einen Teil der flachen Oberfläche (65) anzustoßen.

14. Teigbearbeitungsvorrichtung gemäß einem der Ansprüche 1 -13, bei der zumindest die Förderkammer (23) der Fördereinrichtung (2) innerhalb einer Umhüllung (8) angeordnet ist, wobei die Teigbearbeitungsvorrichtung eine Kühlvorrichtung (9) zum Kühlen des Inneren der Umhüllung (8) und/oder zum Bereitstellen eines Kühlmittelfluids für Kühlmittelleitungen aufweist, die in einem Gehäuse (231) der Fördereinrichtung (2) angeordnet sind.

15. Verwendung einer Teigbearbeitungsvorrichtung (1) gemäß einem der Ansprüche 1 bis 14 zum Fördern von Teig.

## Revendications

1. Appareil de traitement de pâte (1) comprenant :
un dispositif de convoyeur (2) pour la pâte qui comprend une entrée de pâte (21), une sortie de pâte (22), une chambre de convoyage (23) qui est agencée entre l'entrée de pâte et la sortie de pâte et une vis de convoyeur (24, 24', 24") qui est agencée à l'intérieur de la chambre de convoyage ;
un conteneur d'alimentation (3) qui comprend une ouverture de sortie (31) pour alimenter la pâte sur le dispositif de convoyeur, dans lequel, dans une position opérationnelle, l'ouverture de sortie (31) est connectée à l'entrée de pâte (21) du dispositif de convoyeur ; et
un dispositif d'avancement en hélice (4) pour convoyer la pâte dans le conteneur d'alimentation (3) en direction de l'ouverture de sortie (31), dans lequel une première extrémité (41) du dispositif d'avancement en hélice s'étend à l'intérieur du conteneur d'alimentation (3) et une seconde extrémité (42) du dispositif d'avancement en hélice (4) s'étend en direction de la vis de convoyeur (24, 24', 24"), dans lequel la seconde extrémité (42) est agencée à proximité d'une circonférence externe de la vis de convoyeur (24, 24', 24") ;
**caractérisé en ce que** le conteneur d'alimentation peut pivoter depuis la position opérationnelle jusqu'à une position d'éloignement par pivotement, **en ce que** le dispositif d'avancement en hélice est monté de façon libérable dans une partie supérieure de l'entrée de pâte du dispositif de convoyeur lorsque le conteneur d'alimentation est dans la position éloignée par pivotement, **en ce que** le conteneur d'alimentation (3) est connecté au dispositif de convoyeur (2) via une charnière (36), dans lequel la charnière est agencée pour faire pivoter le conteneur d'alimentation (3) autour d'un axe sensiblement horizontal, **en ce que** l'entrée de pâte (21) comprend une partie cylindrique sensiblement circulaire (212) qui est adjacente à la chambre de convoyage (23), dans lequel la seconde extrémité (42) du dispositif d'avancement en hélice (4) s'étend à l'intérieur de la partie cylindrique circulaire (212) et **en ce que** l'appareil de traitement de pâte comprend une bague d'entraînement (213) qui est fixée de manière à pouvoir être entraînée en rotation à l'entrée de pâte (21) du dispositif de convoyeur, et dans lequel le dispositif d'avancement en hélice (4) comprend une bague de montage (43), dans lequel la bague de montage (43) est agencée de façon amovible sur le sommet de la bague d'entraînement (213) de manière à fournir un couplage fixe en rotation entre la bague de montage (43) et la bague d'entraînement (213).

2. Appareil de traitement de pâte selon la revendication 1, dans lequel l'entrée de pâte comprend une partie en forme de cône (211) entre la partie cylindrique sensiblement circulaire (212) et la partie supérieure.

3. Appareil de traitement de pâte selon la revendication 2, dans lequel la seconde extrémité (42) du dispositif d'avancement en hélice (4) est agencée de manière à ce qu'elle constitue une surface de révolution cylindrique sensiblement circulaire.

4. Appareil de traitement de pâte selon l'une quelconque des revendications 1 à 3, dans lequel le dispositif d'avancement en hélice (4) comprend une lame en spirale (40) qui s'étend jusqu'à la seconde extrémité (42) du dispositif d'avancement en hélice.

5. Appareil de traitement de pâte selon l'une quelconque des revendications 1 à 4, dans lequel la bague d'entraînement (213) comprend une surface de support (216), dans lequel la bague de montage (43) comprend une surface de montage (44), dans lequel la surface de montage (44) vient en butée contre la surface de support (216) lorsque la bague de montage (43) est agencée de façon amovible sur le sommet de la bague d'entraînement (213).

6. Appareil de traitement de pâte selon l'une quelconque des revendications 1 à 5, dans lequel la bague d'entraînement (213) comprend un jeu de protubérances (217) qui s'étendent en dehors de la surface de support, et dans lequel la bague de montage (43) comprend un jeu d'évidements (45), et dans lequel chaque protubérance (217) est agencée de manière à ce qu'elle soit adaptée à l'intérieur de l'un desdits évidements (45) lorsque la bague de montage (43) est agencée de façon amovible sur le sommet de la bague d'entraînement (213), ou dans lequel la bague de montage (43) comprend un jeu de protubérances qui s'étendent en dehors de la surface de montage, et dans lequel la bague d'entraînement (213) comprend un jeu d'évidements, et dans lequel chaque protubérance est agencée de manière à ce qu'elle soit adaptée à l'intérieur de l'un desdits évidements lorsque la bague de montage est agencée de façon amovible sur le sommet de la bague d'entraînement.

7. Appareil de traitement de pâte selon l'une quelconque des revendications 1 à 6, dans lequel la vis de convoyeur comprend une section d'arbre de côté d'entrée (25) et une section d'arbre de côté de sortie (26), dans lequel la section d'arbre de côté d'entrée (25) présente un pas plus large ou plus grand que la section d'arbre de côté de sortie (26).

8. Appareil de traitement de pâte selon l'une quelconque des revendications 1 à 7, dans lequel la vis de convoyeur est une première vis de convoyeur (24'), dans lequel le dispositif de convoyeur comprend une seconde vis de convoyeur (24"), et dans lequel la première vis de convoyeur (24') et la seconde vis de convoyeur (24") constituent des pales hélicoïdales en inter-engagement.

9. Appareil de traitement de pâte selon l'une quelconque des revendications 1 à 8, comprenant en outre une filière (6) qui est agencée au niveau de la sortie de pâte (22) du dispositif de convoyeur (2), dans lequel la filière (6) comprend une ouverture (61) au niveau d'un côté qui est à distance de la chambre de convoyage (23) tout en lui faisant face pour délivrer de la pâte ;
de préférence, dans lequel la filière (6) est couplée à la sortie de pâte (22) au moyen d'un montage de verrouillage par rotation ou d'un montage à baïonnette.

10. Appareil de traitement de pâte selon la revendication 9, dans lequel l'appareil comprend un couteau (7), lequel est agencé de manière à ce qu'il se déplace à l'avant de l'ouverture (61) pour couper la pâte délivrée.

11. Appareil de traitement de pâte selon la revendication 10, dans lequel la filière (6) comprend une surface sensiblement plane orientée vers l'extérieur (65), dans lequel la surface plane comprend l'ouverture (61) et dans lequel le couteau (7) comprend un élément de butée (71), dans lequel l'élément de butée (71) est agencé de manière à ce qu'il vienne en butée contre au moins une partie de la surface plane (65) ;
de préférence, dans lequel la filière (6) comprend une came (66) qui s'étend en direction d'une position de montage du couteau (7), dans lequel la surface plane (65) s'étend au-dessus de ladite came (66) et dans lequel l'élément de butée (71) du couteau est agencé de manière à ce qu'il vienne en butée contre la partie de surface plane de la came (66).

12. Appareil de traitement de pâte selon la revendication 10 ou 11, dans lequel le couteau (7) comprend un couteau pouvant être entraîné en rotation, lequel est agencé de manière à ce qu'il soit entraîné en rotation à l'avant de l'ouverture (61) pour couper la pâte délivrée.

13. Appareil de traitement de pâte selon la revendication 11, dans lequel le couteau (7) comprend un couteau pouvant être entraîné en rotation, lequel est agencé de manière à ce qu'il soit entraîné en rotation à l'avant de l'ouverture (61) pour couper la pâte délivrée, et dans lequel l'élément de butée (71) comprend une partie de bague sensiblement circulaire, dans lequel la partie de bague est agencée de manière à ce qu'elle vienne en butée contre au moins une partie de la surface plane (65).

14. Appareil de traitement de pâte selon l'une quelconque des revendications 1 à 13, dans lequel au moins la chambre de convoyage (23) du dispositif de convoyeur (2) est agencée à l'intérieur d'une enceinte (8), dans lequel l'appareil de traitement de pâte comprend un dispositif de refroidissement (9) pour refroidir l'intérieur de l'enceinte (8) et/ou pour alimenter un fluide constitué par un agent de refroidissement sur des conduits d'agent de refroidissement qui sont agencés à l'intérieur d'un carter (231) du dispositif de convoyeur (2).

15. Utilisation d'un appareil de traitement de pâte (1) selon l'une quelconque des revendications 1 à 14 pour convoyer de la pâte.
